# EUROPEAN PATENT SPECIFICATION

(11) **EP 0 397 205 B1**
(45) Date of publication and mention of the grant of the patent: **20.07.1994**
(21) Application number: 90108949.0
(22) Date of filing: 11.05.1990
(51) Int. Cl.: A47L 9/28

(54) **Vacuum cleaner**
Staubsauger
Aspirateur de poussières

(30) Priority: 11.05.1989 JP 118260/89; 23.05.1989 JP 130409/89; 23.05.1989 JP 130412/89; 18.08.1989 JP 213376/89
(43) Date of publication of application: 14.11.1990
(73) Proprietor: MATSUSHITA ELECTRIC INDUSTRIAL CO., LTD., Kadoma-shi, Osaka-fu, 571 (JP)
(72) Inventor: Yamaguchi, Seiji, Kouga-gun, Shiga-ken (JP); Moro, Masaru, Youkaichi-shi, Shiga-ken (JP); Kajikawa, Saburou, Youkaichi-shi, Shiga-ken (JP); Kimura, Masahiro, Echi-gun, Shiga-ken (JP); Okubo, Hideo, Youkaichi-shi, Shiga-ken (JP); Matsuyo, Tadashi, Youkaichi-shi, Shiga-ken (JP); Kawakami, Hiroshi, Youkaichi-shi, Shiga-ken (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 217 216
- FR-A- 2 197 555
- US-A- 4 601 082

## Description

### BACKGROUND OF THE INVENTION

The invention relates to a vacuum cleaner comprising a blower motor; a dust detection means responsive to dust particles sucked in due to rotation of the blower motor for producing a dust detection signal when detecting the dust particles passing through a portion of a dust sucking passage; and an input power controlling means responsive to an output signal of the dust detection means for controlling the input power of the blower motor.

Such a vacuum cleaner is known for instance from EP-A-0 217 216, in which the dust detection means comprises photo-transistors which produce an emitter-collector voltage difference signal of a size which is dependent on the incident light intensity. The voltage is subsequently amplified and used to control the blower motor either directly or, in one embodiment, via a monostable flip-flop. The monostable flip-flop is only triggered when sufficient signal is output from the photo-transistors thereby ensuring that control of the blower motor in dependence on the photo-transistor output only takes place when sufficient dust is being sucked in.

Another prior art vacuum cleaner incorporating many of the same features as EP-A-0 217 216 is disclosed in US 4 680 827. Once again photo-transistors are used to generate a signal related to the amount of dust sucked in, this signal is amplified and then used more or less directly as to control the blower motor. The sucking force is changed in a step like manner between high and low values. Thus, there is the draw-back that the sucking force is not varied in proportion with the amount of dust being sucked into the vacuum cleaner.

A principal shortcoming of the vacuum cleaners of the prior art referred to is the direct dependence of the blower motor control on the current outputs from the photo-transistors. Limited steps have been taken in the prior art to overcome this shortcoming. For example, capacitors have been employed in an attempt to smooth out rapid fluctuations in the photo-transistor signal voltage. Also diodes have been used connected backwards in order to ensure that signals below a certain threshold are not transmitted and hence do not influence the control of the blower motor. The use of the monostable flip-flop in one embodiment of US 4 680 827 described above also falls into this category.

### PRINCIPAL OBJECT OF THE INVENTION

It is thus an object of the invention to provide an improved vacuum cleaner in which the blower motor is controlled according to the amount of dust being sucked in in a more ideal manner than in the prior art.

### BRIEF DESCRIPTION OF THE INVENTION

In a first aspect of the present invention, the object is satisfied in a vacuum cleaner of the initially named kind in that a counting means is connected between the output signal of the dust detection means and the input power controlling means; in that the counting means is provided to count the number of dust particles passing through the portion of the dust sucking passage in a given time interval by using the output signal of the dust detection means; and in that the number of dust particles counted in this given time interval is used to control the input power controlling means.

In an advantageous development of the first aspect of the present invention, the vacuum cleaner is characterised in that it further comprises a pulse width detecting means connected between the output signal of the dust protection means and the input power controlling means; in that the pulse width detecting means is provided for detecting the width of pulses in the output signal of the dust detection means, these pulses arising from dust particles passing through the portion of the dust sucking passage mentioned; and in that the width of the pulses over a given time interval is used to control the input power controlling means.

In a second aspect of the present invention, a vacuum cleaner of the initially named kind is characterised in that it further comprises a pulse width detecting means connected between the output signal of the dust detection means and the input power controlling means; in that the pulse width detecting means is provided for detecting the width of pulses in the output signal of the dust detection means, these pulses arising from dust particles passing through the portion of the dust sucking passage mentioned; and in that the width of the pulses over a given time interval is used to control the input power controlling means.

It is noted that, in contrast to the first aspect of the present invention, in the second aspect of the present invention no counting means is specified.

### BRIEF DESCRIPTION OF THE DRAWINGS

The object and features of the present invention will become more readily apparent from the following detailed description taken in conjunction with the accompanying drawings in which:
Fig. 1 is a cross-sectional view of an optical dust detection portion;
Fig. 2 is a block diagram of a dust detection circuit of a first embodiment of the invention;
Fig. 3 shows a waveform of a dust detection signal of the first embodiment;
Fig. 4 is a block diagram of the first embodiment which is common to first - sixth embodiments;
Fig. 5A is an explanatory diagram of the first embodiment showing a waveform of the dust detection signal;
Fig. 5B is a conversion table used in the first embodiment;
Fig. 5C shows waveforms for controlling input power of Fig. 4;
Fig. 6A shows a flow chart of the first embodiment;
Figs. 6B and 6C are partial flow charts of the first embodiment;
Figs. 7A and 7B show control of a second embodiment;
Fig. 8 shows a flow chart of the second embodiment;
Fig. 9 shows waveforms for controlling input power of blower motor of a third embodiment;
Fig. 10 shows a partial flow chart of the third embodiment;
Fig. 11 shows a partial flow chart of a fourth embodiment;
Figs. 12A and 12B show waveform for removing noise component of the third embodiment;
Fig. 13A and 13B are explanatory diagrams showing rotation speed control of a fifth embodiment;
Fig. 14 shows a flow chart of the fifth embodiment;
Fig. 15 shows a flow chart of a sixth embodiment;
Fig. 16 is a block diagram of a seventh embodiment;
Fig. 17 shows a flow chart of the seventh and eighth embodiments; and
Fig. 18 is a block diagram of the eighth embodiment.

The same or corresponding elements or parts are designated by like references throughout the drawings.

### DETAILED DESCRIPTION OF THE INVENTION

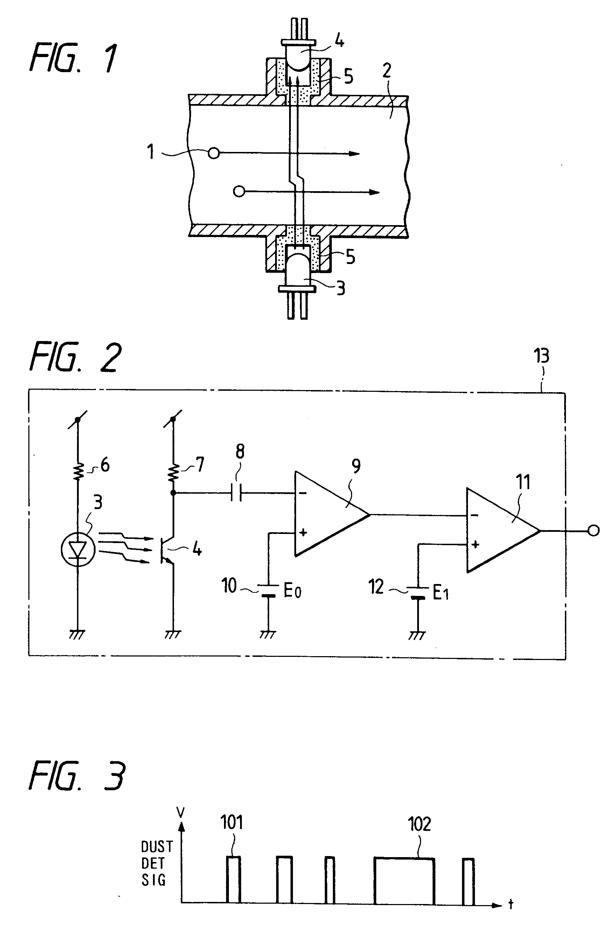

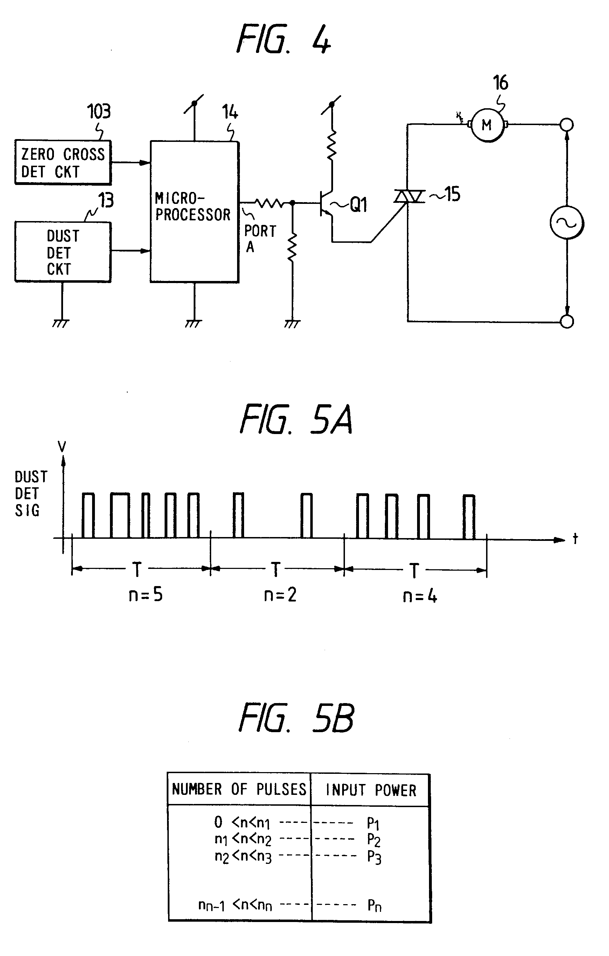

Referring now to the drawings, Fig. 1 is a cross-sectional view of an optical dust detection portion and Fig. 2 is a block diagram of a dust detection circuit of a first embodiment of the invention. Fig. 4 is a block diagram of the first embodiment which is common to first to sixth embodiments of the invention.

In Fig. 1, a light emitting device (LED) 3 and a light sensitive device 4 are provided to a portion of suction passage 2 where a dust particle 1 passes, the light emitting device 3 and the light sensitive device 4 facing each other. The light emitting and the light sensitive devices 3 and 4 are supported by transparent holders 5 respectively which are provided for shielding of air and transmitting a light signal from the light emitting device 3. Fig. 2 is a schematic circuit diagram of a dust detection circuit 13. In Fig. 2, a current is supplied to the light emitting device 3 through a resistor 6 from a dc power supply, so that the light emitting device 3 emits continuously. The light sensitive device 4 (hereinbelow referred as to phototransistor) receives a light signal from the light emitting device 3. A collector terminal of the phototransistor 4 is connected to a resistor 7 for supplying a bias current and coupled to a minus input of an amplifier 9 through a capacitor 8 for cutting off a direct current. A plus input of the amplifier 9 is connected to a reference potential 10. Therefore, the amplifier 9 produces an output signal varying around potential E₀ of a reference voltage 10 wherein only variation of collector potential of the phototransistor 4 (ac component) is amplified. A minus input terminal of a comparator 11 is connected to an output terminal of the amplifier 9. A plus input thereof is connected to a reference potential 12. An analog output signal of the amplifier 9 is compared with the reference potential E₁ for waveform shaping.

The operation of the above-mentioned structure, will be described hereinbelow.

When a dust particle 1 passes across a light path between the light emitting device 3 and the phototransistor 4, the light particle 1 intercepts the light path between the light emitting device 3 and the phototransistor 4, so that the base current of the phototransistor 4 decreases and thus, a collector potential thereof increases. A potential changing component with variation in light intensity is amplified through the capacitor 8 around the reference potential E₀ to detect light intensity change by the dust particle 1 as an analog signal. When the detected analog signal decreases under the reference potential E₁, an output signal of the comparator 11 changes to H. As mentioned, the analog signal indicative of light intensity change is converted into a digital signal, i.e., a pulse signal or dust detection signal is generated. There is a correlation that:
When a small dust particle passes the light path, width of a pulse 101 is short as shown by a waveform of the pulse signal of Fig. 3 because the time interval necessary for the dust particle to pass through the light path is short. On the other hand, in the case of a large dust particle, for example, a paper scrap, width of a pulse 102 is large.

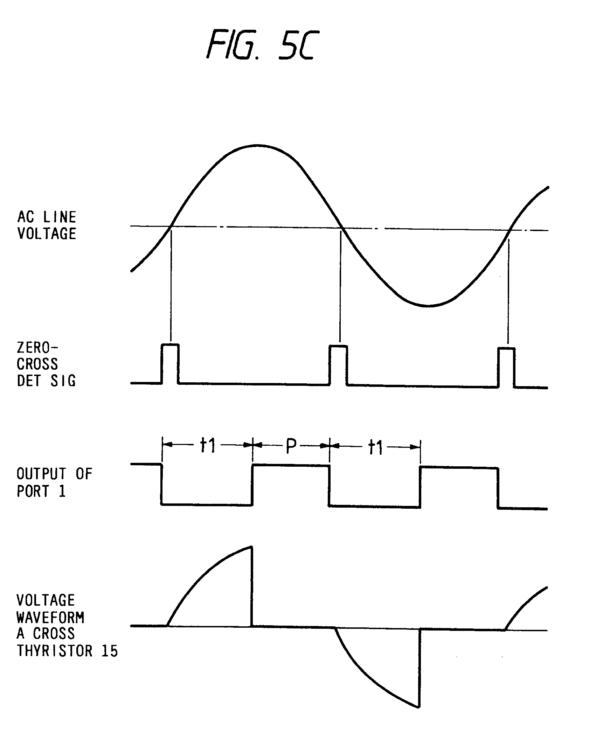

Fig. 4 is a block diagram of a vacuum cleaner using the above-mentioned dust detection circuit 13. In Fig. 4, the pulse signal produced by the dust detection circuit 13 is inputted into a microprocessor 14 as a control means. The microprocessor 14 counts pulses in response to the dust detection signal from the dust detection circuit 13 and detects the number of pulses inputted for a given interval T, for example, in Fig. 5A showing waveform of the dust detection signal, five, two, and four pulses inputted for every given interval T respectively. The microprocessor 14 selects input power values for the blower motor 16 from a plurality of preset input power values P₁ ∼ Pn in accordance with count n of pulses inputted for the given interval, as shown in Fig. 5B of a data table stored in ROM of the microprocessor 14. The microprocessor 14 controls a gate of a bi-directional thyristor 15 through a transistor Q1 responsive to port A of the microprocessor 14 in response to the dust detection signal and an output signal of a zero-cross detection circuit 103 to control input power to a blower motor 16 by phase controlling, as shown in Fig. 5C, according to a program stored in the microprocessor 14. The zero-cross detection circuit 103 detects when ac line voltage crosses zero volt.

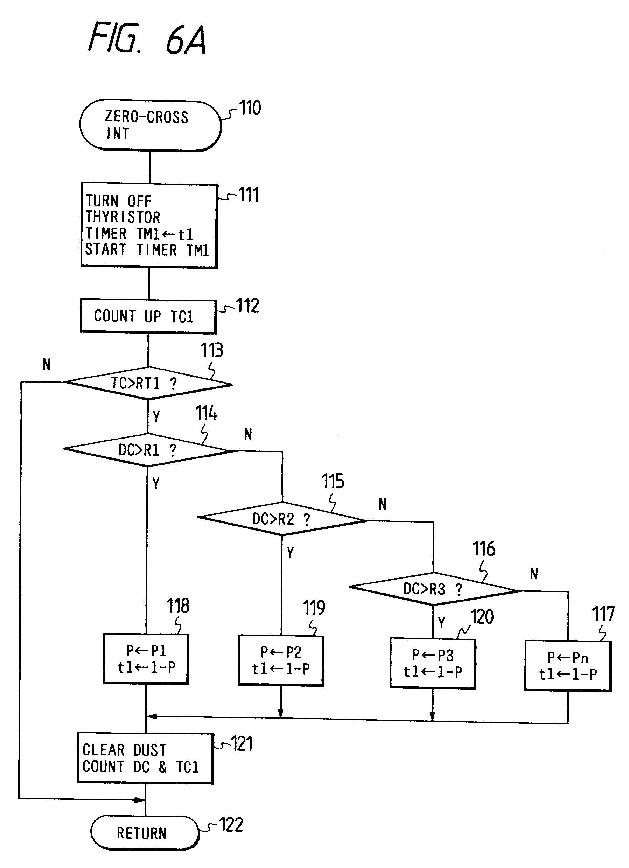

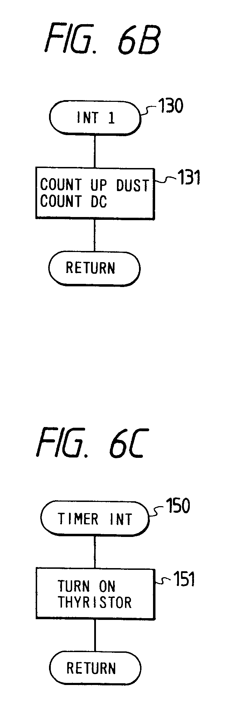

As shown in Fig. 6A, processing executed by the microprocessor 14 is as follows:
When an operator turns on the vacuum cleaner the microprocessor 14 performs initializing, for example clears a memory and resistors and sets an initial time interval value of timer TM1 which causes timer interrupt and it enables zero-cross interrupt, interrupt INT1 in an unshown main routine. Then processing waits interrupts in the main routine. In response to an output signal of the zero-cross detection circuit 103, the microprocessor 14 starts zero-cross interrupt at step 110 shown in Fig. 6A. In response to the dust detection signal, the microprocessor 14 starts interrupt INT1 processing 130 shown in Fig. 6B and counts up the number of dust particles DC in step 131 and then processing returns to the main routine. In response to timer interrupt, timer INT starts in step 150, as shown in Fig. 6c and in next step 151, the microprocessor 14 turns on thyristor 15.

At every zero-crossing of ac line voltage, the microprocessor 14 starts zero-cross interrupt in step 110. In the following step 111, the microprocessor 14 turns off thyristor 15 and set t1 to a timer TM1, built in the microprocessor 14. Then, the timer TM1 is started. This causes timer TM1 interrupt when the interval corresponding to the initial value set in the main routine has passed. In the succeeding step 112, the microprocessor 14 counts up time count TC indicative of the number of zero-crossing of ac line voltage. In the next step, a decision is made as to whether time count TC exceeds a reference value RT1. If the time count TC does not exceed RT1 processing returns to the main routine. If the time count TC1 exceeds RT1 processing proceeds to step 114. This means that the time interval for counting the number of dust particles has passed. In step 114, a decision is made as to whether the dust count DC exceeds a reference value R1. If the dust count DC exceeds a reference value R1, input power constant P1 is set to a variable P in step 118 and the microprocessor 14 subtracts P from one to obtain off-interval t₁ of the thyristor 15. Thus, interval t1 shown in Fig. 5C is changed in accordance with dust count DC. If the dust count DC does not exceed R1 processing proceeds to step 115. In succeeding steps 115 and 116, a decision is made as similar to the step 114 and correspondingly given input power constant P1, P2, P3, or P4 is set to the variable P where there is a relation that R1>R2>R3 and P1>P2>P3>P4. Thus, the greater the number of dust detected for a given interval indicated by time count TC1 the larger the input power for the blower motor 16. In the succeeding step 121 of steps 118, 119, 120, and 117, the microprocessor 14 clears dust count DC and time count TC1. Then processing returns to the main routine. Thus, the thyristor 15 is turned off in step 111 and turned on in step 151 and the interval t1 indicative of off-state is determined (1-P1), (1-P2), and (1-P)in accordance with the number of dust detected for the given interval.

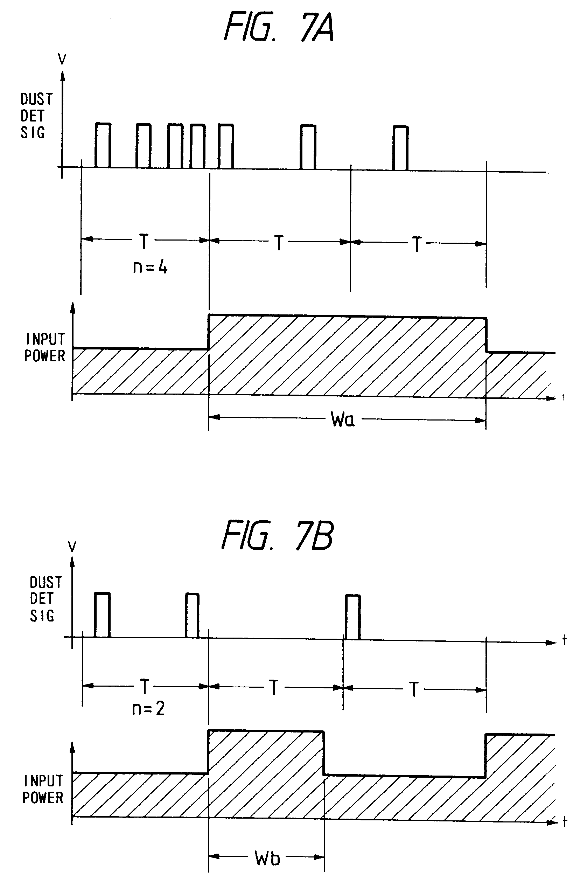

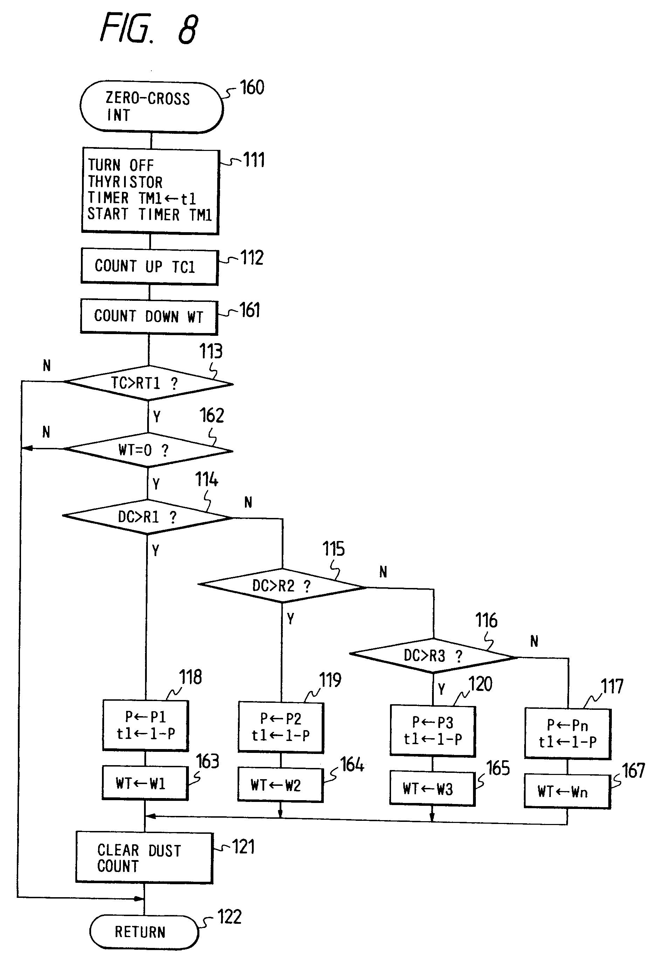

Hereinbelow will be described a second embodiment of a vacuum cleaner. Structure of the second embodiment is basically the same as the first embodiment. There is only difference that processing is executed in accordance with a flow chart of Fig. 8. Fig. 7A and 7B show control of a second embodiment of the invention. The microprocessor 14 counts up pulses of the pulse signal generated by the dust detection circuit 13 for a given interval T. The microprocessor 14 changes input power for the blower motor 16 in accordance with the number of the counted pulses and changes time interval of maintaining respective input power values correspondingly.

In an example of Fig. 7A, input power of a given value is maintained for an interval Wa corresponding to four pulses inputted for first interval T because four pulses are generated for the first interval T. In an example of Fig. 7B, a given input power is maintained for an interval Wb corresponding to two pulses because two pulses are generated for the first interval T. There is a relation of maintaining interval W that Wa > Wb, so that the microprocessor 14 controls maintaining interval W such that the larger the number of pulses generated, the longer the interval is maintained.

Processing is executed in accordance with a flow chart of Fig. 8. However, basic operation is the same as the first embodiment and there are differences in steps 161 - 167. The main routine and interrupt routines are basically the same as the first embodiment. Therefore, hereinbelow will be described only different portions.

In Fig. 8, after processing of step 117, 118, 119, and 120, steps 163, 164, 165, and 167 are added respectively. In these steps, the microprocessor 14 sets time count W1-Wn respectively. On the other hand, step 161 is provided between steps 112 and 113 and further a decision is made in step 162. These steps detects when interval for maintaining a determined input power has passed. Thus, the input power determined in steps 117-120 is maintained for interval W1-Wn in accordance with the number of dust particles.

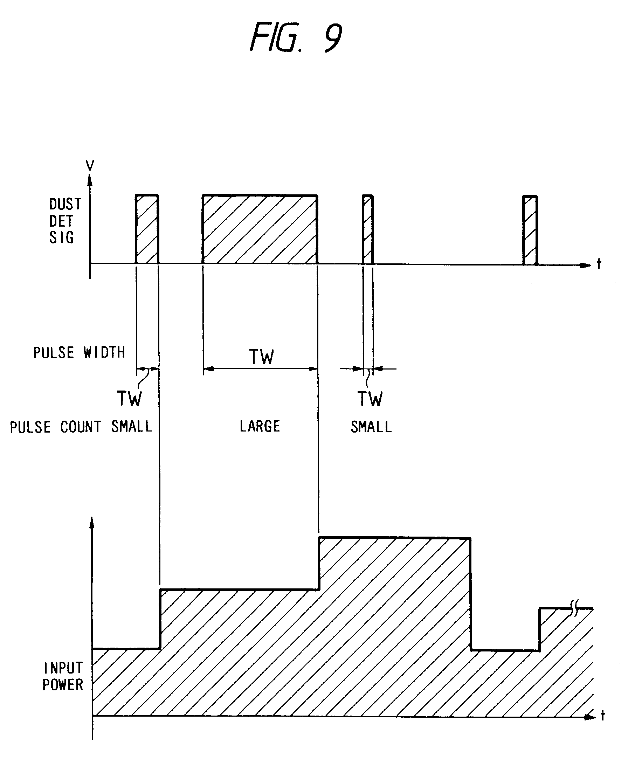

Fig. 9 shows control of a third embodiment of the invention. The microprocessor 14 changes preset values of input power for the blower motor 16 by detecting pulse width and the number of pulses of the pulse signal generated by the dust detection circuit 13, pulse width varying in accordance with size of dust.

In other words, the input power for the blower motor 16 is set in accordance with the number of detected pulses generated for a given interval T. The number of dust particles is compensated by pulse width information. For example, the number n of detected pulses is multiplied by pulse width compensation factor k. The result is used for setting input power of the blower motor 16. For example, when a dust particle of large size is sucked and a pulse with large width is detected, the number of pulses detected is compensated by information of pulse width, so that the number of pulses is set to several counts of pulses equivalently. In this state, sucking force is increased considerably, so that a large power of sucking force is kept for a large size dust particle.

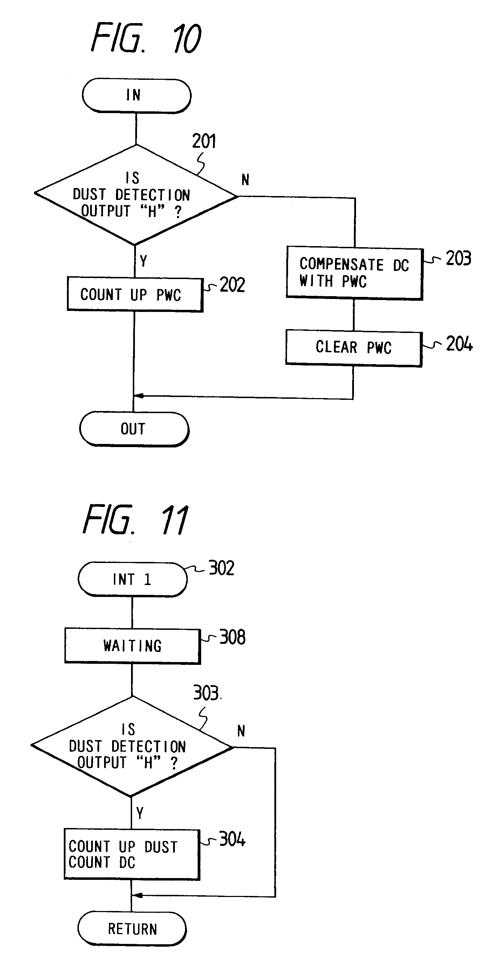

Basic processing is carried out according to the flow chart of Fig. 6A and processing shown in Fig. 10 of a flow chart is executed between steps 112 and 113 of Fig. 6A. Thus basic operation is the same as the first embodiment. Only different portion is described.

Processing starts at step 201 following step 112. In step 201, a decision is made as to whether dust detection output signal is H. If the dust detection signal is H, processing proceeds to step 202. In step 202, the microprocessor 24 increases a count PWC which indicates pulse width because during H step of the dust detection signal, this count is increased at every zero-cross interrupt. Processing proceeds to step 112 of Fig. 6A. In step 201, if the dust detection signal is L, processing proceeds to step 203. In step 203, the microprocessor 14 compensates the dust count DC with the count PWC of pulse width count. For example, the number n of detected pulses is multiplied by pulse width compensation factor k. In the following step 204, the microprocessor 14 clears count PWC.

Fig. 11 shows a fourth embodiment of the invention. The flow chart of Fig. 11 is used in replacement of the flow chart of Fig. 6B. Thus, the main routine and other interrupt routine are the same as in the first embodiment. In Fig. 11, in response to the dust detection signal, interrupt processing starts. In step 302, a waiting is performed. The interval is several milliseconds. Then, in next step 303 the microprocessor 14 detects whether the dust detection signal is H or L. If the dust detection signal is H, the detection signal is true. Thus, in the following step 304, the microprocessor 14 counts up dust count DC. On the other hand, if the dust detection signal is L, the detected signal is not true, i.e., a noise. Thus, counting up of dust count is not performed and processing returns to the main routine directly.

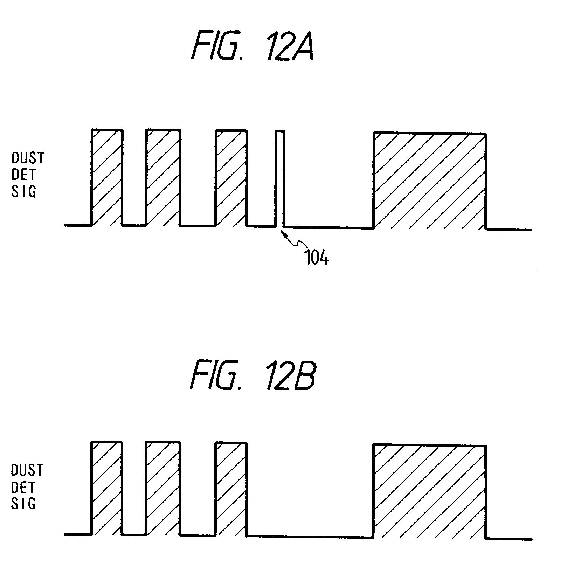

Fig. 12A shows a waveform of dust detection signal. In Fig. 12A, a noise component detected in comparator 11 is removed, as shown in Fig. 12B.

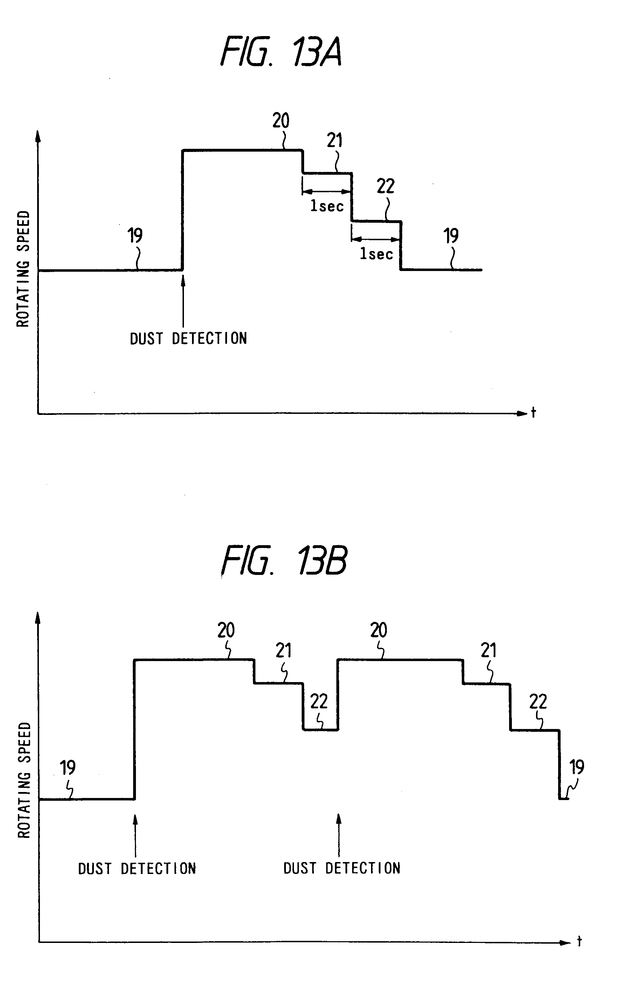

Figs. 13A and 13B show control of fifth embodiment of the invention. In a vacuum cleaner of fifth embodiment of the invention, the rotating speed is recovered stepwise to the rotating speed set before detection of dust such that the rotating speed is changed at every predetermined interval by a given value to become equal with the initial rotating seed gradually. In Fig. 13A, when dust is detected, rotating speed of the blower motor 16 is increased to a level 20 from an initial rotating speed 19 and after a predetermined interval, for example one second, has passed, the rotating speed is decreased to a level 21. Next, after the rotating speed is maintained for one second, the rotating speed is decreased to a level 22 further and is recovered to the initial level 19 one second after. In other words, in this embodiment, the microprocessor 14 controls rotating speed such that it changes the rotating speed from an initial value to another value; then maintains the another value for a given interval; and further repeatedly changes said rotating speed from the another value by a given value at every given interval until the rotating speed returns to said initial value.

Moreover, as shown in Fig. 13B, if dust is detected within interval of maintaining the rotating speed at the level 22, it is possible to increase the rotating speed to level 20 again.

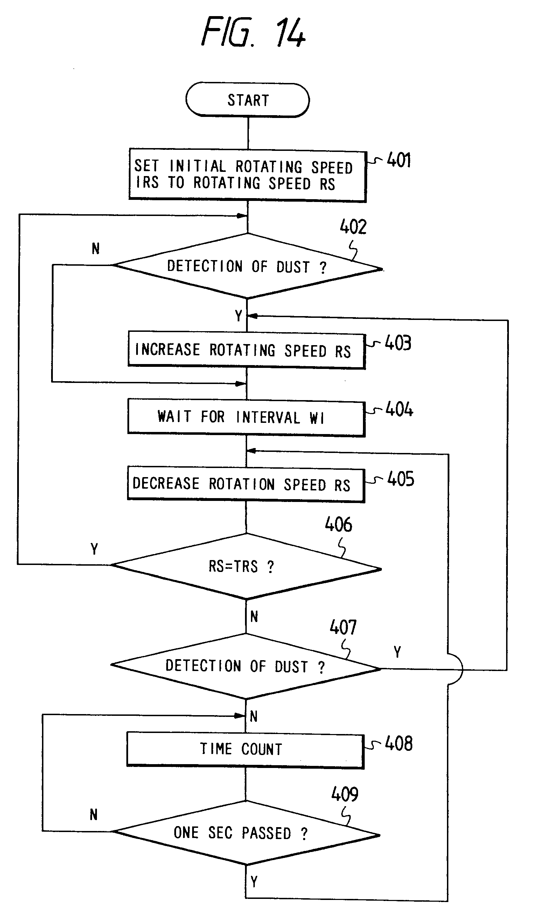

Fig. 14 shows a flow chart for realizing the above-mentioned embodiment. Processing starts at step 401 when an operator turns on the vacuum cleaner after unshown initializing step is executed. In step 401, the microprocessor 14 sets initial rotating speed IRS to rotating speed RS. Next, in step 402, a decision is made as to whether a dust particle is detected. If a dust particle is detected, processing proceeds to step 403. In step 403, the microprocessor 14 increases rotating speed RS. Next, in step 404, processing waits for interval WI, i.e., one second. If a dust particle is not detected, processing proceeds to step 404 directly. In the following step 405, the microprocessor 14 decreases rotating speed RS. Next, in step 406, a decision is made as to whether rotating speed RS is equal to the initial rotating speed. If rotating speed RS is equal to the initial rotating speed, processing proceeds to step 402. If rotating speed RS is not equal to the initial rotating speed, processing proceeds to step 407. In step 407, the microprocessor 14 detects dust. If there is no dust, waiting of one second is performed in steps 408 and 409. When one second has passed, processing proceeds to step 405 and decreases rotation speed again. This routine is repeated until rotating speed RS equals the initial rotating speed. Rotating speed is controlled by steps 111 of zero-cross interrupt shown is Fig. 6A and interrupt INT1 of Fig. 6B and basic structure is shown in Fig. 4.

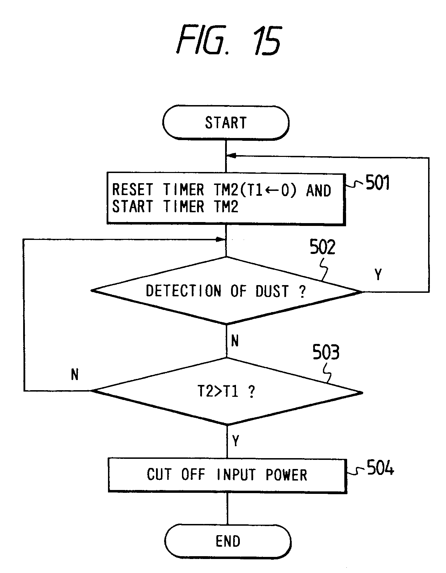

Fig. 15 shows a sixth embodiment of the invention. The microprocessor 14 turns off the input power of the blower motor 16 shown in Fig. 4 by controlling the gate of the thyristor 15 when the dust detection circuit 13 does not detect dust for a given interval. Processing is executed in accordance with a flow chart of Fig. 15. In Fig. 15, processing starts in step 501 where the microprocessor 14 resets and starts a timer TM2 provided in the microprocessor 14. In the following step 502, a decision is made as to whether dust is detected. If dust is detected processing returns to step 501. If dust is not detected, processing proceeds to step 503. In step 503, a decision is made as to whether the time interval T2 exceeds a predetermined value T1. If the time interval T2 exceeds the predetermined value T1, the microprocessor 14 cuts off the input power of the blower motor 16. If the time interval T2 does not exceed the predetermined value T1, processing returns to step 502. As mentioned above, in the vacuum cleaner of the sixth embodiment, the input power of the blower motor 16 is turned off if dust is not detected for a given interval.

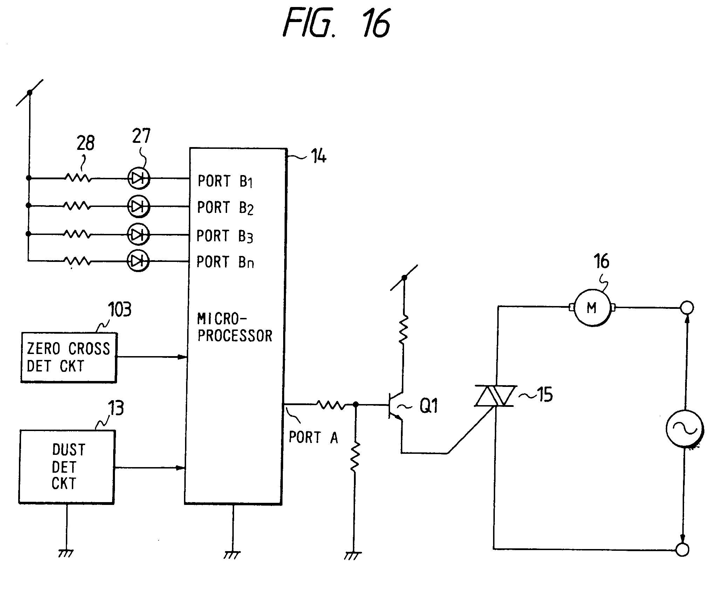

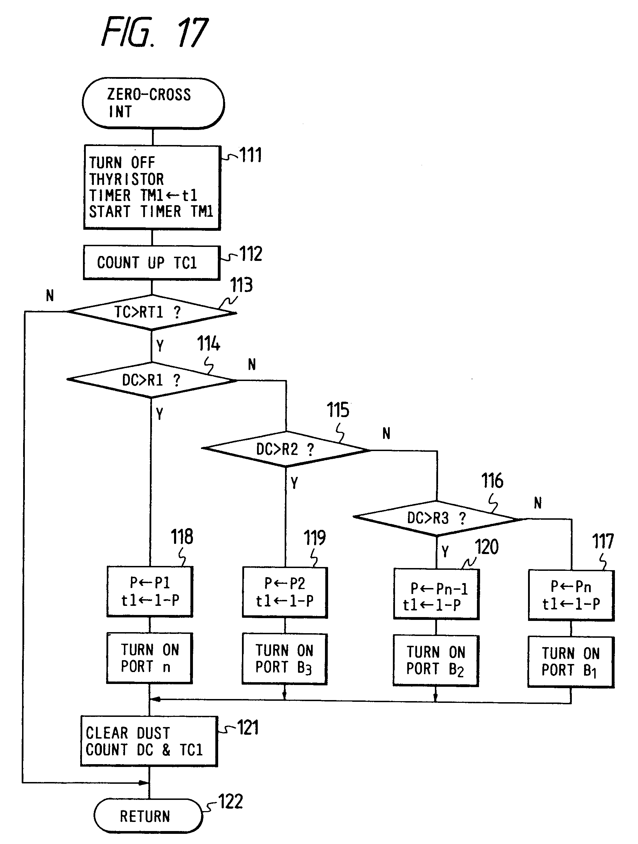

Fig. 16 shows a seventh embodiment of the invention. In Fig. 16, the basic structure of the seventh embodiment is the same as that of the first embodiment. There is a difference that plural indication elements (LED) 27 are connected to ports B₁-Bₙ of the microprocessor 14 respectively. The indication elements 27 are supplied with dc current through current limiting resistors 28. The processing of this embodiment, shown in Fig. 17, is basically the same as that of the first embodiment. There is difference that after steps 117-120, the microprocessor 14 turns on either ports B₁-Bₙ in accordance with dust count DC through judging steps 114-116. Therefore, the degree of the dust count is indicated by the indicators 27 to show the degree of uncleanness of the floor, i.e., dust amount.

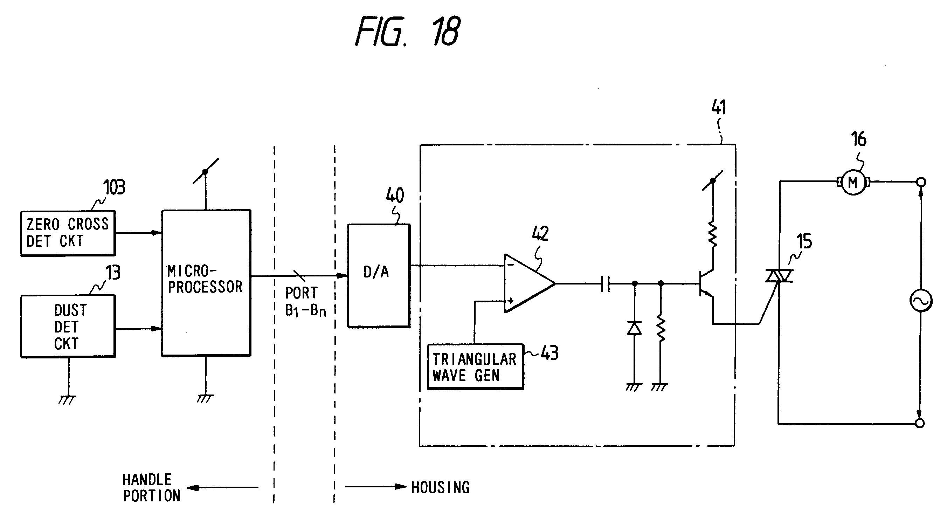

Fig. 18 shows an eighth embodiment of the invention. The structure of this embodiment is basically the same as that of the seventh embodiment. There is a difference that the thyristor 15 is controlled by the microprocessor 14 through a power control circuit 41 and the output port B is connected to a D/A converter. Thus, the microprocessor 14 outputs dust count DC at the output port B of the microprocessor 14 similar to the seventh embodiment. The dust count DC of digital signal is converted into analog signal by the D/A converter 40. The output of the D/A converter is compared with triangular wave from a triangular wave generator 43 by a comparator 42. The Output of the comparator controls duty of turning on of the thyristor 15. The microprocessor 14 executes the process shown in Fig. 17 in response to zero-cross detection circuit 13 and the dust detection circuit 13. In the seventh embodiment, the dust count outputted at the port B of the microprocessor 14 is used for indication of dust. On the other hand, in the eighth embodiment, the output signal of its ports B₁-Bₙ is used for controlling the thyristor 15. The above-mentioned structure is provided for separating a driving unit from a control unit. The driving unit comprises the D/A converter 40, the power control circuit 41 and the thyristor 15 and the blower motor 16 provided in a housing. The control unit comprises the microprocessor 14, the dust detection circuit 13, and the zero-cross detection circuit 17 provided in a handle portion of the vacuum cleaner.

## Claims

1. A vacuum cleaner comprising:
a blower motor (16);
a dust detection means (13) responsive to dust particles (1) sucked in due to rotation of the blower motor (16) for producing a dust detection signal when detecting the dust particles passing through a portion of a dust sucking passage (2);
an input power controlling means (PORT A, Q1, 15; PORT B1-BN, 40, 41, 15) responsive to an output signal of the dust detection means (13) for controlling the input power (P) of the blower motor (16),
characterized in that the vacuum cleaner further comprises
a counting means (103, 14) connected between the output signal of the dust detection means (13) and the input power controlling means (PORT A, Q1, 15; PORT B1-BN, 40, 41, 15),
in that the counting means (103, 14) is provided to count the number of dust particles (DC) passing through said portion of the dust sucking passage (2) in a given time interval (T) using the output signal of the dust detection means (13),
and in that the number of dust particles (DC) counted in the given time interval (T) is used to control the input power controlling means (PORT A, Q1, 15; PORT B1-BN, 40, 41, 15).

2. A vacuum cleaner as claimed in claim 1,
characterized in that the vacuum cleaner further comprises
a pulse width detecting means (14) connected between the output signal of the dust detection means (13) and the input power controlling means (PORT A,Q1,15; PORT B1-BN,40,41,15),
in that the pulse width detecting means (14) is provided for detecting the widths of pulses in the output signal of the dust detection means (13), said pulses arising from dust particles passing through said portion of the dust sucking passage (2),
and in that the width of the pulses over a given time interval (T) is used to control the input power controlling means (PORT A, Q1, 15; PORT B1-BN, 40, 41, 15).

3. A vacuum cleaner as claimed in any one of preceding claims,
characterized in that
the input power controlling means (PORT A, Q1, 15; PORT B1-BN, 40, 41, 15) further comprises storing means for storing plural preset input power values (P1 - Pn) and selecting means for selecting an input power value (P) from the plural preset input power values in accordance with the number of dust particles (DC) counted.

4. A vacuum cleaner as claimed in one of the preceding claims,
characterized in that
the input power controlling means (PORT A, Q1, 15; PORT B1-BN, 40, 41, 15) further comprises means responsive to the dust detection signal for maintaining the input power (P) for an interval (Wa, Wb) determined by the number of dust particles (DC) counted.

5. A vacuum cleaner as claimed in one of the preceding claims,
characterised in that
the vacuum cleaner further comprises indicating means (27) responsive to the dust detection signal for indicating the degree of detection of dust in accordance with the number of dust particles (DC).

6. A vacuum cleaner as claimed in one of the preceding claims,
characterized in that
the blower motor (16) and the input power controlling means (PORT A, Q1, 15; PORT B1-BN, 40, 41, 15) are accommodated in a housing, and the dust detection means (13) and the counting means (14) are accommodated in a handle portion of the vacuum cleaner.

7. A vacuum cleaner comprising:
a blower motor (16);
a dust detection means (13) responsive to dust particles (1) sucked in due to rotation of the blower motor (16) for producing a dust detection signal when detecting the dust particles passing through a portion of a dust sucking passage (2);
an input power controlling means (PORT A, Q1, 15; PORT B1-BN, 40, 41, 15) responsive to an output signal of the dust detection means (13) for controlling the input power (P) of the blower motor (16),
characterized in that the vacuum cleaner further comprises
a pulse width detecting means (14) connected between the output signal of the dust detection means (13) and the input power controlling means (PORT A,Q1,15; PORT B1-BN,40,41,15),
in that the pulse width detecting means (14) is provided for detecting the widths of pulses in the output signal of the dust detection means (13), said pulses arising from single dust particles passing through said portion of the dust sucking passage (2),
and in that the width of the pulses over a given time interval (T) is used to control the input power controlling means (PORT A, Q1, 15; PORT B1-BN, 40, 41, 15).

8. A vacuum cleaner as claimed in one of the claims 2 to 7,
characterized in that
the dust detection means (13) outputs the dust detection signal only when the pulse width of the dust detection signal exceeds a given value.

9. A vacuum cleaner as claimed in one of the preceding claims,
characterized in that
the dust detection means (13) ignores the dust detection signal when the pulse width of the dust detection signal is shorter than a given value.

10. A vacuum cleaner as claimed in one of the preceding claims,
characterized in that
the dust detection means comprises a light emitting device (3) and a light sensitive device (4) both provided such that light from the light emitting device (3) crosses the passage (2) to be received by the light sensitive device (4).

11. A vacuum cleaner as claimed in one of the preceding claims,
characterized in that
the input power controlling means (PORT A, Q1, 15; PORT B1-BN, 40, 41, 15) controls the input power (P) such that it changes the rotating speed from an initial value (19) to a second value (20); then maintains the second value (20) for a second given interval; and further repeatedly changes the rotating speed from the second value (20) by a given value at every second given interval until the rotating speed returns to the initial value (19).

12. A vacuum cleaner as claimed in one of the preceding claims,
characterized in that
the input power controlling means (PORT A, Q1, 15; PORT B1-BN, 40, 41, 15) controls the input power (P) such that it cuts off the input power when no pulse of the dust detection signal is inputted thereto for a third given interval.

13. A vacuum cleaner as claimed in claim 12,
characterized in that
the third given interval is measured with a timer means (TM2) which restarts measurement of time when a dust particle is detected during the measuring to determine the third interval.

## Patentansprüche

1. Ein Staubsauger mit:
einem Gebläsemotor (16);
einem Stauberfassungsmittel (13), das auf Staubpartikel (1) anspricht, die aufgrund der Rotation des Gebläsemotors (16) eingesaugt werden, um ein Stauberfassungssignal zu erzeugen, wenn es die Staubpartikel erfaßt, die durch einen Teil eines Staubansaugkanals (2) treten;
einem Eingangsenergiesteuermittel (Anschlußbuchse A; Q,15; Anschlußbuchse B1 - BN, 40, 41, 15), das auf ein Ausgangssignal des Stauberfassungsmittels (13) anspricht, um die Eingangsenergie (P) des Gebläsemotors (16) zu steuern,
dadurch **gekennzeichnet,**
daß der Staubsauger weiterhin ein Zählmittel (103, 14) besitzt, das zwischen dem Ausgangssignal des Stauberfassungsmittels (13) und dem Eingangsenergiesteuermittel (Anschlußbuchse A, Q1, 15; Anschlußbuchse B1 - BN, 40, 41, 15) verbunden ist,
daß das Zählmittel (103, 13) vorgesehen ist, um die Anzahl von Staubpartikeln (DC), die durch den Bereich des Staubansaugkanals (2) innerhalb eines vorgegebenen Zeitintervalls (T) treten, unter Verwendung des Ausgangssignals des Stauberfassungsmittels (13) zu zählen,
und daß die Anzahl von Staubpartikeln (DC), die innerhalb des vorgegebenen Zeitintervalls (T) gezählt werden, verwendet wird, um das Eingangsenergiesteuermittel (Anschlußbuchse A, Q1, 15; Anschlußbuchse B1 - BN, 40, 41, 15) zu steuern.

2. Ein Staubsauger nach Anspruch 1,
dadurch **gekennzeichnet,**
daß der Staubsauger in weiterhin ein Pulsbreitenerfassungsmittel (14) umfaßt, das zwischen dem Ausgangssignal des Stauberfassungsmittels (13) und dem Eingangsenergiesteuermittel (Anschlußbuchse A, Q1, 15; Anschlußbuchse B1 - BN, 40, 41, 15) verbunden ist,
daß das Pulsbreitenerfassungsmittel (14) vorgesehen ist, um die Breiten der Pulse in dem Ausgangssignal des Stauberfassungsmittels (13) zu erfassen, wobei die Pulse durch Staubpartikel, die durch den Bereich des Staubansaugkanals (2) treten, entstehen, und
daß die Breite der Pulse über ein vorgegebenes Zeitintervall (T) verwendet wird, um das Eingangsenergiesteuermittel (Anschlußbuchse A, Q1, 15; Anschlußbuchse B1 - BN, 40, 41, 15) zu steuern.

3. Ein Staubsauger wie einem der vorhergehenden Ansprüche beansprucht,
dadurch **gekennzeichnet,**
daß das Eingangsenergiesteuermittel (Anschlußbuchse A, Q1, 15; Anschlußbuchse B1 - BN, 40, 41, 15) weiterhin ein Speichermittel zum Speichern einer Mehrzahl von vorgegebenen Eingangsenergiewerten (P1 - Pn) und Auswahlmittel zum Auswählen eines Eingangsenergiewertes (P) aus der Mehrzahl von vorgegebenen Eingangsenergiewerten entsprechend der Anzahl von gezählten Staubpartikeln (DC) besitzt.

4. Ein Staubsauger nach einem der vorhergehenden Ansprüche,
dadurch **gekennzeichnet,**
daß das Eingangsenergiesteuermittel (Anschlußbuchse A, Q1, 15; Anschlußbuchse B1 - BN, 40, 41, 15) weiterhin Mittel besitzt, die auf das Stauberfassungssignal ansprechen, um die Eingangsenergie P für ein Intervall (Wa, Wb) beizubehalten, das durch die Anzahl von gezählten Staubpartikeln (DC) bestimmt wird, beizubehalten.

5. Ein Staubsauger nach einem der vorhergehenden Ansprüche,
dadurch **gekennzeichnet,**
daß der Staubsauger weiterhin Anzeigemittel (27) besitzt, die auf das Stauberfassungssignal ansprechen, um den Grad der Stauberfassung entsprechend der Anzahl von Staubpartikeln (DC) anzuzeigen.

6. Ein Staubsauger nach einem der vorhergehenden Ansprüche,
dadurch **gekennzeichnet,**
daß der Gebläsemotor (16) und das Eingangsenergiesteuermittel (Anschlußbuchse A, Q1, 15; Anschlußbuchse B1 - BN, 40, 41, 15) in einem Gehäuse vorgesehen sind, und das Stauberfassungsmittel (13) und das Zählmittel (14) in einem Handgriffbereich des Staubsaugers vorgesehen sind.

7. Ein Staubsauger mit:
einem Gebläsemotor (16);
einem Stauberfassungsmittel (13), das auf Staubartikel (1) anspricht, die aufgrund der Rotation des Gebläsemotors (16) eingesaugt werden, um ein Stauberfassungssignal zu erzeugen, wenn es die Staubpartikel erfaßt, die durch einen Teil eines Staubansaugkanals (2) treten;
einem Eingangsenergiesteuermittel (Anschlußbuchse A; Q 15; Anschlußbuchse B1 - BN 40, 41, 15), das auf ein Ausgangssignal des Stauberfassungsmittels (13) anspricht, um die Eingangsenergie (P) des Gebläsemotors (16) zu steuern,
dadurch **gekennzeichnet,**
daß der Staubsauger weiterhin ein Pulsbreitenerfassungsmittel (14) besitzt, das zwischen dem Ausgangssignal des Stauberfassungsmittel (13) und dem Eingangsenergiesteuermittel (Anschlußbuchse A, Q1, 15; Anschlußbuchse B1 - BN, 40, 41, 15) verbunden ist,
daß das Pulsbreitenerfassungsmittel (14) vorgesehen ist, um die Breiten von Pulsen in dem Ausgangssignal des Stauberfassungsmittels (13) zu erfassen, wobei die Pulse durch einzelne Staubpartikeln herrühren, die durch den Bereich des Staubansaugkanals (2) treten, und
daß die Breite der Pulse über ein vorgegebenes Zeitintervall (P) verwendet wird, um das Eingangsenergiesteuermittel (Anschlußbuchse A, Q1, 15; Anschlußbuchse B1 - BN, 40, 41, 15) zu steuern.

8. Ein Staubsauger nach einem der Ansprüche 2 bis 7,
dadurch **gekennzeichnet,**
daß das Stauberfassungsmittel (13) das Stauberfassungssignal nur dann ausgibt, wenn die Pulbreite des Stauberfassungssignals einen vorgegebenen Wert überschreitet.

9. Ein Staubsauger nach einem der vorhergehenden Ansprüche,
dadurch **gekennzeichnet,**
daß das Stauberfassungsmittel (13) das Stauberfassungssignal ignoriert, wenn die Pulsbreite des Stauberfassungssingals kürzer als ein vorgegebener Wert ist.

10. Ein Staubsauger nach einem der vorhergehenden Ansprüche,
dadurch **gekennzeichnet,**
daß das Stauberfassungsmittel eine lichtemitierende Einrichtung (3) und eine lichtempfindliche Einrichtung (4) besitzt, die beide so vorgesehen sind, daß Licht von der lichtemitierenden Einrichtung (3) den Kanal (2) durchquert, um von der lichtempfindlichen Einrichtung (4) empfangen zu werden.

11. Ein Staubsauger nach einem der vorhergehenden Ansprüche,
dadurch **gekennzeichnet,**
daß das Eingangsenergiesteuermittel (Anschlußbuchse A, Q1, 15; Anschlußbuchse B1 - BN, 40, 41, 15) die Eingangsenergie (P) derart steuert, daß es die Drehgeschwindigkeit von einem Anfangswert (19) auf einen zweiten Wert (20) ändert; dann den zweiten Wert (20) während eines zweiten vorgegebenen Intervalls beibehält; und weiter wiederholt die Drehgeschwindigkeit von dem zweiten Wert (20) um einen vorgegebenen Wert bei jedem zweiten vorgegebenen Intervall ändert, bis die Drehgeschwindigkeit auf ihren Anfangswert (19) zurückkehrt.

12. Ein Staubsauger nach einem der vorhergehenden Ansprüche,
dadurch **gekennzeichnet,**
daß das Eingangsenergiesteuermittel (Anschlußbuchse A, Q1, 15; Anschlußbuchse B1 - BN, 40, 41, 15) die Eingangsenergie (P) derart steuert, daß es die Eingangsenergie unterbricht, wenn kein Puls des Stauberfassungssignals während eines dritten vorgegebenen Intervalls eingegeben wird.

13. Ein Staubsauger nach Anspruch 12,
dadurch **gekennzeichnet,**
daß das dritte vorgegebene Intervall mit einem Timermittel (TM2) gemessen wird, daß die Zeitmessung wieder neu beginnt, wenn ein Staubpartikel während der Messung erfaßt wird, um das dritte Intervall zu bestimmen.

## Revendications

1. Aspirateur comprenant :
un moteur de soufflage (16) ;
des moyens de détection de poussière (13), sensibles à des particules de poussière (1) aspirées du fait de la rotation du moteur de soufflage (16), pour fournir un signal de détection de poussière lorsqu'ils détectent les particules de poussière passant à travers une partie d'un passage d'aspiration de poussière (2) ;
des moyens de commande de la puissance fournie (BORNE A, Q1, 15 ; BORNES B1-BN, 40, 41, 15), sensibles à un signal de sortie des moyens de détection de poussière (13) afin de commander la puissance fournie (P) au moteur de soufflage (16),
caractérisé en ce que l'aspirateur comprend en outre
des moyens de comptage (103, 14) reliés entre le signal de sortie des moyens de détection de poussière (13) et les moyens de commande de la puissance fournie (BORNE A, Q1, 15 ; BORNES B1-BN, 40, 41, 15),
en ce que les moyens de comptage (103, 14) sont prévus afin de compter le nombre de particules de poussière (DC) qui traversent ladite partie du passage d'aspiration de poussière (2) dans un intervalle de temps donné (T) en utilisant le signal de sortie des moyens de détection de poussière (13),
et en ce que le nombre de particules de poussière (DC) comptées dans l'intervalle de temps donné (T) est utilisé pour commander les moyens de commande de la puissance fournie (BORNE A, Q1, 15 ; BORNES B1-BN, 40, 41, 15).

2. Aspirateur selon la revendication 1, caractérisé en ce que l'aspirateur comprend en outre des moyens de détection de largeur des impulsions (14), reliés entre le signal de sortie des moyens de détection de poussière (13) et les moyens de commande de la puissance fournie (BORNE A, Q1, 15 ; BORNES B1-BN, 40, 41, 15),
en ce que les moyens de détection de largeur des impulsions (14) sont prévus pour détecter les largeurs des impulsions dans le signal de sortie des moyens de détection de poussière (13), lesdites impulsions provenant de particules de poussière traversant ladite partie du passage d'aspiration de poussière (2),
et en ce que la largeur des impulsions sur un intervalle de temps donné est utilisée pour commander les moyens de commande de la puissance fournie (BORNE A, Q1, 15 ; BORNES B1-BN, 40, 41, 15).

3. Aspirateur selon l'une quelconque des revendications précédentes, caractérisé en ce que les moyens de commande de la puissance fournie (BORNE A, Q1, 15 ; BORNES B1-BN, 40, 41, 15) comprennent en outre des moyens de stockage pour stocker des valeurs multiples présélectionnées de la puissance fournie (P1- Pn), et des moyens de sélection pour choisir une valeur de la puissance fournie (P) parmi les valeurs multiples présélectionnées de la puissance fournie, en accord avec le nombre de particules de poussière (DC) comptées.

4. Aspirateur selon l'une des revendications précédentes, caractérisé en ce que les moyens de commande de la puissance fournie (BORNE A, Q1, 15 ; BORNES B1-BN, 40, 41, 15) comprennent en outre des moyens sensibles au signal de détection de poussière pour maintenir la puissance fournie (P) pendant un intervalle (Wa, Wb) déterminé par le nombre de particules de poussière (DC) comptées.

5. Aspirateur selon l'une des revendications précédentes, caractérisé en ce que l'aspirateur comprend en outre des moyens indicateurs (27) sensibles au signal de détection de poussière pour indiquer le degré de détection de poussière en accord avec le nombre de particules de poussière (DC).

6. Aspirateur selon l'une quelconque des revendications précédentes, caractérisé en ce que le moteur de soufflage (16) et les moyens de commande de la puissance fournie (BORNE A, Q1, 15 ; BORNES B1-BN, 40, 41, 15) sont logés dans un boîtier, et en ce que les moyens de détection de poussière (13) et les moyens de comptage (14) sont logés dans une partie de poignée de l'aspirateur.

7. Aspirateur comprenant :
un moteur de soufflage (16) ;
des moyens de détection de poussière (13), sensibles aux particules de poussière (1) aspirées du fait de la rotation du moteur de soufflage (16) pour produire un signal de détection de poussière quand ceux-ci détectent les particules de poussière traversant une partie d'un passage d'aspiration de poussière (2) ;
des moyens de commande de la puissance fournie (BORNE A, Q1, 15 ; BORNES B1-BN, 40, 41, 15), sensibles à un signal de sortie des moyens de détection de poussière (13) afin de commander la puissance fournie (P) au moteur de soufflage (16),
caractérisé en ce que l'aspirateur comprend en outre
des moyens de détection de largeur des impulsions (14), reliés entre le signal de sortie des moyens de détection de poussière (13) et les moyens de commande de la puissance fournie (BORNE A, Q1, 15 ; BORNES B1-BN, 40, 41, 15),
en ce que les moyens de détection de largeur des impulsions (14) sont prévus pour détecter les largeurs d'impulsions dans le signal de sortie des moyens de détection de poussière (13), lesdites impulsions provenant de particules de poussière uniques traversant ladite partie du passage d'aspiration de poussière (2),
et en ce que la largeur des impulsions sur un intervalle de temps donné (T) est utilisée pour commander les moyens de commande de la puissance fournie (BORNE A, Q1, 15 ; BORNES B1-BN, 40, 41, 15).

8. Aspirateur selon l'une quelconque des revendications 2 à 7, caractérisé en ce que les moyens de détection de poussière (13) produisent le signal de détection de poussière seulement lorsque la largeur des impulsions du signal de détection de poussière excède une valeur donnée.

9. Aspirateur selon l'une des revendications précédentes, caractérisé en ce que les moyens de détection de poussière (13) ignorent le signal de détection de poussière lorsque la largeur d'impulsion du signal de détection de poussière est plus courte qu'une valeur donnée.

10. Aspirateur selon l'une des revendications précédentes, caractérisé en ce que les moyens de détection de poussière comprennent un dispositif émetteur de lumière (3) et un dispositif sensible à la lumière (4), ceux-ci étant prévus de telle sorte que la lumière provenant du dispositif émetteur de lumière (3) traverse le passage (2) afin d'être reçue par le dispositif sensible à la lumière (4).

11. Aspirateur selon l'une des revendications précédentes, caractérisé en ce que les moyens de commande de la puissance fournie (BORNE A, Q1, 15 ; BORNES B1-BN, 40, 41, 15) commandent la puissance fournie (P) de telle sorte qu'ils changent la vitesse de rotation depuis une valeur initiale (19) à une seconde valeur (20) ; qu'ils maintiennent ensuite la seconde valeur (20) pendant un second intervalle donné ; et qu'ils changent ensuite de façon répétée la vitesse de rotation depuis la seconde valeur (20) d'une valeur donnée à chaque second intervalle donné jusqu'à ce que la vitesse de rotation retourne à sa valeur initiale (19).

12. Aspirateur selon l'une des revendications précédentes, caractérisé en ce que les moyens de commande de la puissance fournie (BORNE A, Q1, 15 ; BORNES B1-BN, 40, 41, 15) commandent la puissance fournie (P) de telle sorte qu'ils coupent la puissance fournie lorsqu'aucune impulsion du signal de détection de poussière n'est entrée dans lesdits moyens pour un troisième intervalle donné.

13. Aspirateur selon la revendication 12, caractérisé en ce que le troisième intervalle donné est mesuré à l'aide de moyens de temporisation (TM2) qui remettent en marche la mesure du temps quand une particule de poussière est détectée pendant la mesure afin de déterminer le troisième intervalle.
